# EUROPEAN PATENT SPECIFICATION

(11) **EP 0 920 187 B1**
(45) Date of publication and mention of the grant of the patent: **11.12.2002**
(21) Application number: 98309778.3
(22) Date of filing: 30.11.1998
(51) Int. Cl.: H04N 1/32, H04N 1/34, H04M 15/28

(54) **Fax call charge indication**
Gebührenanzeige von Faksimileübertragungen
Indication de frais d'appels de télécopie

(30) Priority: 28.11.1997 KR 9763639
(43) Date of publication of application: 02.06.1999
(73) Proprietor: SAMSUNG ELECTRONICS CO., LTD., Suwon-City, Kyungki-do (KR)
(72) Inventor: Oak, Seung-soo, Sungnam, Kyonggi-do (KR)
(74) Representative: Sanderson, Nigel Paul

(56) References cited:
- GB-A- 2 066 621
- US-A- 4 585 904
- US-A- 5 043 983
- US-A- 5 473 630
- PATENT ABSTRACTS OF JAPAN vol. 014, no. 584 (E-1018), 27 December 1990 (1990-12-27) & JP 02 254848 A (NEC CORP), 15 October 1990 (1990-10-15)

## Description

### BACKGROUND TO THE INVENTION

The present invention concerns the indication of call charges on a display of a facsimile device.

Generally, facsimile devices include a printer for printing data on a recording medium, a scanner for scanning a document, a modem for transmitting and receiving data to and from a remote facsimile device and an operating panel including a number of function keys. The operating panel has an indicating window to display information concerning the operation of the facsimile device. The scanner scans a document to obtain document data and the modem transmits the document data to the remote facsimile device and receives facsimile data transmitted by the remote facsimile device. Finally, the printer prints the facsimile data.

In facsimile communication using the conventional public switching telephone network (PSTN), there are two ways to calculate the call charge after communication is completed. One way is to obtain the call charge by multiplying a transferring time or a number of charging units by a call charge rate and the other way is to obtain it using service information that indicates the call charge provided by the exchange.

When calculating call charge using service information provided by the exchange, the exchange transfers a specified signal to the transmitting facsimile device at predetermined time intervals during the call. The transmitting facsimile device or a private exchange detect the number of the specified signal received and calculate the call charge by multiplying that number by a call charge rate. Thus, the transmitting facsimile device must have a call charge calculating program to calculate the call charge from the number of specified signals and the call charge rate.

As described above, the facsimile device has an indicating window on which is indicated the call charge. Since some facsimile devices have no apparatus for calculating and indicating the call charge, however, the user must in those circumstances measure the call time and calculate the call charge by multiplying the call time by a call charge rate.

Calculation of the call charge for calls made to the same area is relatively simple, whereas for long distance or international calls, the call charge must be calculated by multiplying the call time by a different call charge rate. Thus each call charge rate for long distance and international telephone services must be set individually. Therefore, it is better that a program capable of calculating the call charge be included in the facsimile device. Thus, the user must remember call charge rates for various types of telephone call such as long distance or international telephone services, or the facsimile device must contain a program capable of calculating the call charge according to the type of telephone call.

Calculating the call charge by multiplying the call time by the call charge rate after measuring the call time, there are disadvantages in that when the call charge rate is changed by a telecommunication service, the call charge rate must be reset in the facsimile device.

### Summary of the Invention

The objective of the present invention is to deal with these problems. Accordingly, the present invention provides a method of determining a call charge for a facsimile device comprising:
determining whether call charge information that is included in service information is in a facility message or in a display message;
if the call charge information is in a facility message, detecting a number of charging units from the facility message and calculating the call charge by multiplying the number of charging units by a call rate which has been set by a call rate setting process; and
if the call charge information is in a display message, detecting the call charge from the display message.

Preferably, the calculated call charge or the detected call charge is displayed on a display of the facsimile device. The method may further comprise storing the calculated call charge or the detected call charge as a present call charge and calculating a total call charge by adding the present call charge to a stored accumulated call charge and storing the total call charge.

The call rate setting process may include establishing a call rate setting function and inputting a desired call rate and storing the desired call rate.

The method may further comprise checking whether or not a printing function is set and outputting a calculated call charge or the detected call charge to a printer. Preferably, the call charge is printed in a form that includes at least one of the following: day, time, destination telephone number, present call charge and total call charge.

The present invention also provides apparatus for determining a call charge in a facsimile device comprising:
means for receiving service information;
means for determining whether call charge information included in the service information is in a facility message or in a display message;
means for detecting a number of charging units from the facility message and calculating the call charge by multiplying the number of charging units by a pre-set call rate if the call charge information is in a facility message; and
means for detecting the call charge from the display message if the call charge information is in a display message.

The apparatus may comprise a display window for displaying a call charge and/or a printer for printing a call charge in a predetermined printing form including at least one of the following: day, time, destination telephone number, present call charge and total call charge.

### BRIEF DESCRIPTION OF THE DRAWINGS

The present invention will now be described by way of example with reference to the accompanying drawings in which:
FIG. 1 is a schematic block diagram of an apparatus according to the present invention;
FIG. 2 is a detailed block diagram showing the first control device in FIG. 1;
FIG. 3 shows the data format of a facility message;
FIG. 4 shows the data format of a display message;
FIG. 5 is a flow chart of the process of indicating the call charge on the display of the facsimile device; and
FIG. 6 is a flow chart of the process of inputting a call charge rate.

### DESCRIPTION OF THE PREFERRED EMBODIMENT

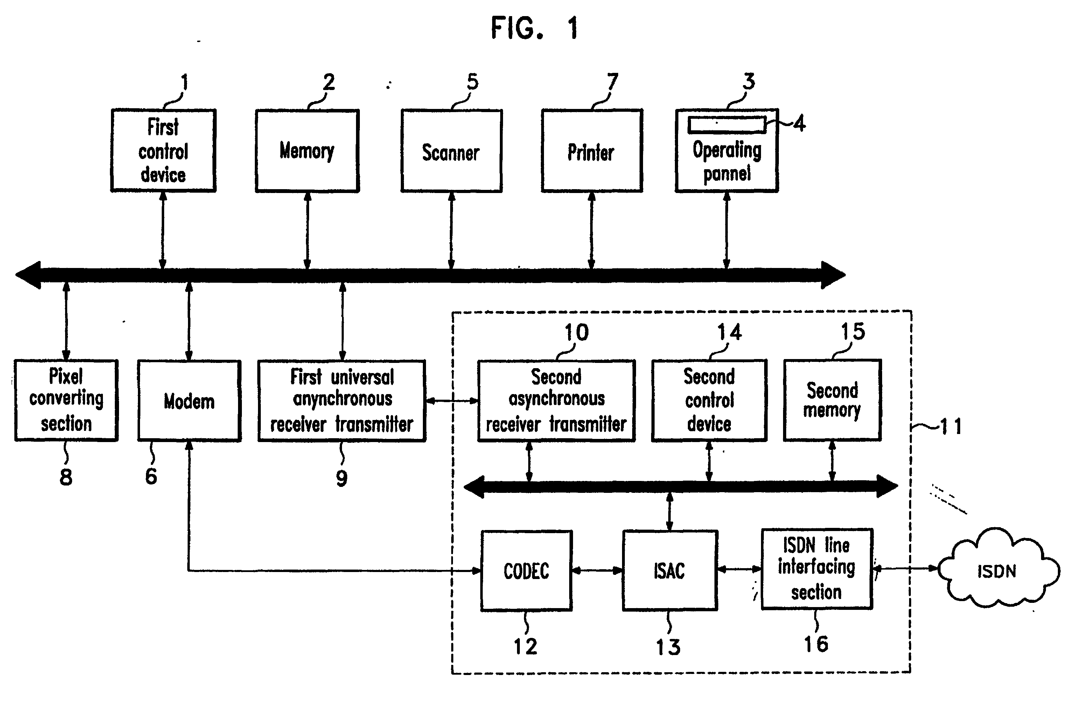

As shown in FIG. 1, a first controlling section 1 generally controls the facsimile device according to its program. A first memory 2 holds program data, protocol data, character data and data regarding transmission and reception. The data are stored in the first memory 2 under the control of the first controlling section 1. An operating panel 3 includes a plurality of keys to generate key data in the facsimile device and a window to display various data including the key data. When the key data are generated, the first controlling section 1 receives the key data and transfers the key data to the window.

A scanner 5 scans document data and converts the document data into digital image data. Then, the scanner 5 provides the image data to the first controlling section 1. A modem 6 modulates data output from the first controlling section 1 into analogue or demodulates an analogue signal into a digital signal according to a control signal of the first controlling section 1.

A printer 7 prints received facsimile data according to a control signal of the first controlling section 1. A pixel converting section 8 converts the facsimile data received in the modem 6 or the document data scanned by the scanner 5 into a bit stream to be recognized by the printer 7, or the bit stream into image data.

A first and second universal asynchronous receiver/transmitter 9 and 10 (UART) transmits and receives information to be indicated to a user and control information to and from each other after analysing information on a D-channel between a main board and an interfacing board 11. A CODEC 12 codes image and voice signals in analogue modulated by the modem 6 into digital image and voice signals and transmits the digital image and voice signals to another facsimile device through a communication line, or decodes digital image data received from the communication line into analogue image data and transmits the analogue image data to the modem 6. ASIC 13 performs the protocol of the facsimile device which is connected to the communication line.

A second controlling section 14 exchanges information with the first controlling section 1 and generally controls the interfacing board 11 under the control of the first controlling section 1. A second memory 15 holds various programs performed by the second controlling section 14. A communication line interfacing section 16 interfaces various signals and data between the communication line 11 and a communication line of another facsimile device.

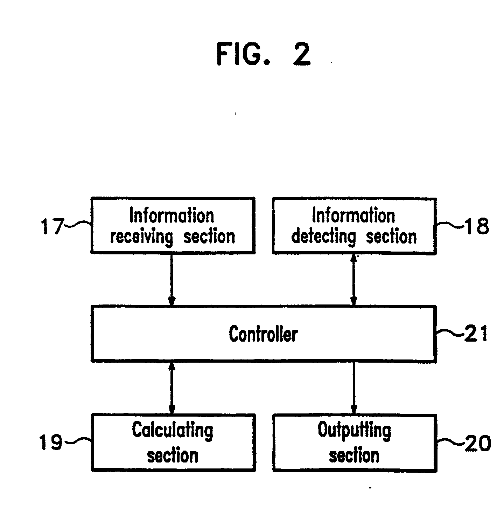

As shown in FIG. 2, an information receiving section 17 receives display information input from the communication line. An information detecting section 18 detects call charge information and its type which are included in the display information received from the communication line. A calculating section 19 calculates the call charge to be proportional to the number of charging units and adds the present call charge to an accumulated call charge. An output section 20 outputs the present call charge and the accumulated call charge to the window 4 or the printer 7 so that the user can identify the present call charge and the accumulated call charge. A controller 21 controls these elements to perform their functions.

In the facsimile device as shown in FIG. 1, the main board is connected to the interfacing board through the first UART 9 and the second UART 10. When receiving the service information which is transmitted from the communication line through the interfacing board, the second controlling section 14 analyses the service information. Then, the second controlling section 14 transfers the call charge information to the main board through the first and second UARTs 9 and 10. The first controlling section 1 on the main board analyses and outputs the call charge information to the indicating window 4 of the operating panel 3.

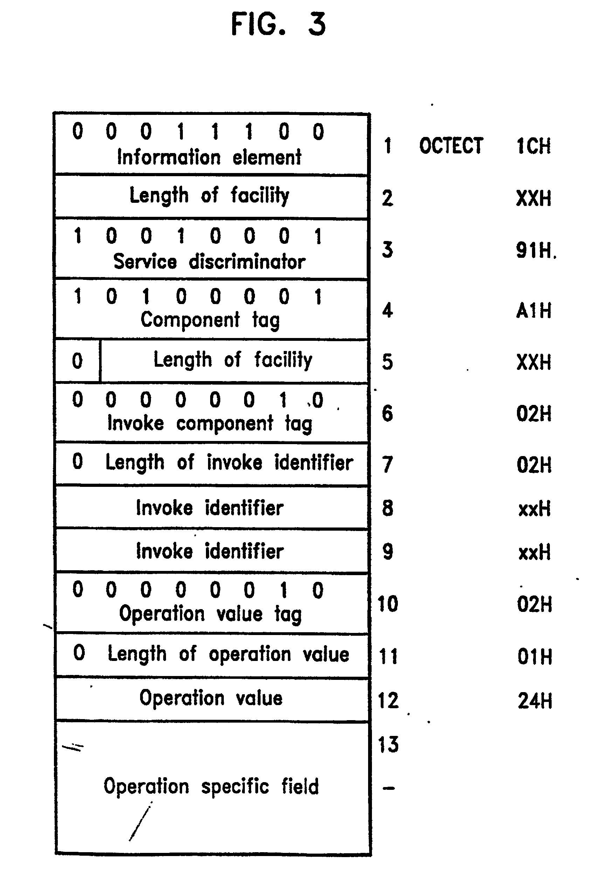

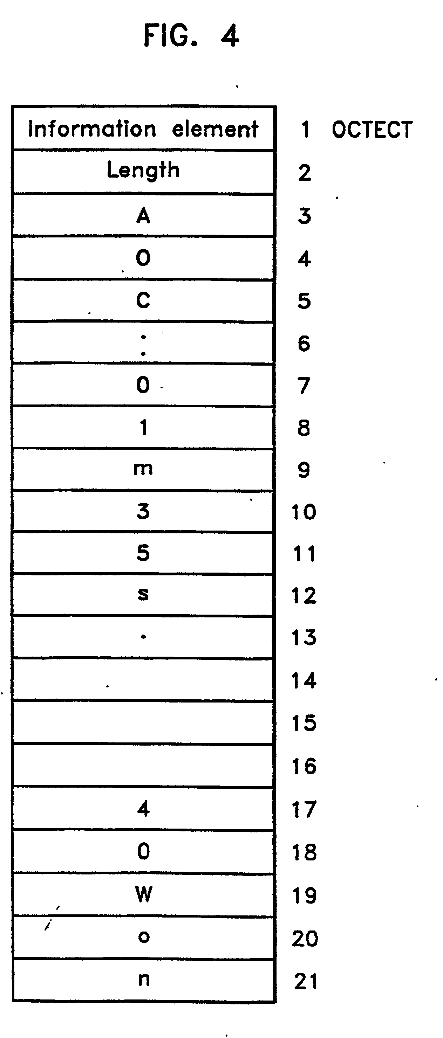

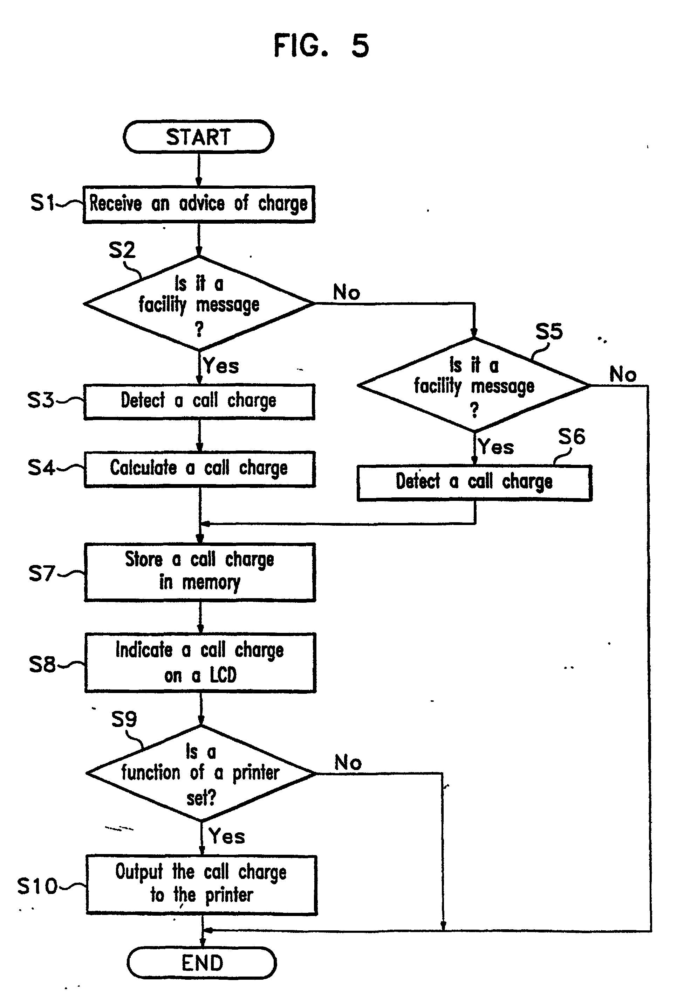

A process for indicating the call charge information received in the facsimile device on the indicating window 4 of the facsimile device after each call is shown in FIG. 5. Many countries have different types of service information for indicating the call charge which generally are included in a class 3 message. Any one country may provide a facility message including a number of charging unit for the user to calculate the call charge as shown in FIG. 3, whilst another country may provide a display message including the call charge for the user as shown in FIG. 4. Accordingly, the present invention will provide an apparatus and method for indicating and printing the call charge in the facsimile device, regardless of the type of the class 3 message that includes the service information.

The ASIC 13 divides the facility and display messages which are received in the facsimile device through the line interfacing section 16 of the interfacing board 11, as respectively shown in Figs. 3 and 4, into data on a D-channel. The second controlling section 14 transmits the divided messages to the first UART 9 through the second UART 10. The first UART 9 receiving the message transmits a interrupt signal to the first controlling section 1 and indicates the reception of the messages to the first controlling section 1. Then, the first controlling section 1 processes the interrupt signal as shown in FIG. 5.

As the first controlling section 1 receives the interrupt signal, the information receiving section 17 of the first controlling section 1 determines whether the received message is a facility message or a display message, in step S2. If the received message is a facility message as shown in FIG. 3, the information detecting section 18 detects the number of charging units to calculate the call charge, in step S3. The calculating section 19 calculates the call charge by multiplying the number of charging units by the call charge rate already set, in step S4.

On the other hand, if the received message is not a facility message in step S2, the first controlling section 1 determines whether the received message is a display message, in step S5. As a result, if the received message is a display message as shown in FIG. 4, the information detecting section 18 need not perform a separate calculating process and detects the call charge data included in the display message, in step S6. The first controlling section 1 stores the call charge data detected in steps S4 or S6 in the first memory 2, in step S7.

The first memory 2 holds the present call charge and the accumulated call charge as the above steps are repeatedly carried out. The first controlling section 1 detects the present call charge stored in the first memory when the call is complete and outputs the present call charge to the indicating window 4 of the operating panel 3 through the output section 20. Accordingly, the present call charge is indicated on the indicating window 4, in step S4.

Furthermore, the first controlling section 1 checks whether the printing function is set in the printer 7, in step S9. If the printing function is set out in the printer 7, the first controlling section 1 outputs the information for the present call charge or the accumulated call charge which is required by the user to the printer 7 through the output section 20, in step S10. Thus, the user can identify the call charge from the indicating window 4.

The first memory 2 holds day, time, telephone numbers, present call charge and accumulated call charge in a table. Each datum can be selectively output from the first memory 2 according to the printing form required by the user.

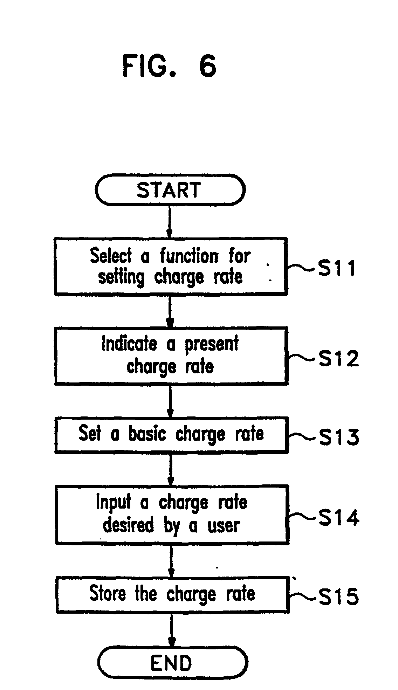

FIG. 6 is a flow chart showing a process of calculating a call charge by inputting the call charge rate. The call charge rate is provided by a service provider, such as a hotel, which supplies a facsimile transmitting service. After the call is completed, the user is informed that the total of the call charge to which the call charge rate is applied by the service provider will be paid.

If the user or the service provider selects a function for setting the call charge rate in step S11, the first controlling section 1 detects the present call charge rate stored in the first memory 2 and outputs the present call charge rate to the indicating window 4 through the output section 20, in step S12. The first controlling section 1 sets the present call charge rate indicated on the indicating window 4 as a reference call charge rate, in step S13.

Then, if the user or the service provider inputs a desired call charge rate in step S14, data for the desired call charge rate are stored in the first memory 2, as data for a set call charge rate, in step S15. Thus, the process of inputting the call charge rate is completed. The call charge rate which is set in such a manner as described above is applied in the process of calculating the call charge rate in step S4 as shown in FIG. 5. The call charge is calculated to be in correspondence with the number of charging units.

Finally, the present call charge and the total of the call charge are output to the indicating window 4 and the printer 7 according to the number of charging units and the call charge rate set by the user or the service provider. Accordingly, the user can identify the information for the call charge easy.

According to the present invention, even though the message included in the service information for indicating the call charge may be a facility message or a display message, the apparatus for indicating the call charge can indicate the call charge.

Since the apparatus detects the information for the call charge included in the D-channel of the service information, the user identifies the call charge conveniently and the service provider can manage the information for the user easily, together with his call charges.

Furthermore, the apparatus can detect the call charge from all kinds of messages and indicates the call charge on the display of the facsimile device, such as the indicating window, regardless of the whether the information for the call charge included in the D-channel is a facility message or a display message.

## Claims

1. A method of determining a call charge for a facsimile device comprising:
determining whether call charge information that is included in service information is in a facility message or in a display message;
if the call charge information is in a facility message, detecting a number of charging units from the facility message and calculating the call charge by multiplying the number of charging units by a call rate which has been set by a call rate setting process; and
if the call charge information is in a display message, detecting the call charge from the display message.

2. A method according to claim 1 further comprising displaying the calculated call charge or the detected call charge on a display of the facsimile device.

3. A method according to claim 1 or claim 2, further comprising:
storing the calculated call charge or the detected call charge as a present call charge; and
calculating a total call charge by adding the present call charge to a stored accumulated call charge and storing the total call charge.

4. A method according to any preceding claim, in which the call rate setting process includes:
establishing a call rate setting function and inputting a desired call rate; and
storing the desired call rate.

5. A method according to any preceding claim, further comprising:
checking whether or not a printing function is set; and
outputting a calculated call charge or the detected call charge to a printer.

6. A method according to claim 5, in which the call charge is printed in a form that includes at least one of the following: day, time, destination telephone number, present call charge and total call charge.

7. Apparatus for determining a call charge in a facsimile device comprising:
means for receiving service information;
means for determining whether call charge information included in the service information is in a facility message or in a display message;
means for detecting a number of charging units from the facility message and calculating the call charge by multiplying the number of charging units by a pre-set call rate if the call charge information is in a facility message; and
means for detecting the call charge from the display message if the call charge information is in a display message.

8. Apparatus according to claim 7 adapted to perform a method according to any one of claims 2-6.

9. Apparatus according to claim 8 comprising a display window for displaying a call charge.

10. Apparatus according to claim 8 comprising a printer for printing a call charge in a predetermined printing form including at least one of the following: day, time, destination telephone number, present call charge and total call charge.

## Patentansprüche

1. Verfahren zum Bestimmen einer Verbindungsgebühr für eine Faksimile-Vorrichtung, mit:
Bestimmen, ob sich Verbindungsgebühren-Informationen, die in den Service-Informationen enthalten sind, in einer Geräte-Nachricht oder in einer Anzeige-Nachricht befinden;
wenn sich die Verbindungsgebühren-Informationen in einer Geräte-Nachricht befinden, dann Erfassen einer Anzahl von Gebühreneinheiten aus der Geräte-Nachricht und Berechnen der Verbindungsgebühr durch Multiplizieren der Anzahl von Gebühreneinheiten mit einer Verbindungsrate, die durch einen Verbindungsraten-Einstellprozess eingestellt ist; und
wenn sich die Verbindungsgebühren-Informationen in einer Anzeige-Nachricht befinden, dann Erfassen der Verbindungsgebühr aus der Anzeige-Nachricht.

2. Verfahren nach Anspruch 1, außerdem mit dem Anzeigen der berechneten Verbindungsgebühr oder der erfassten Verbindungsgebühr auf einer Anzeige der Faksimile-Vorrichtung.

3. Verfahren nach Anspruch 1 oder Anspruch 2, außerdem mit:
Speichern der berechneten Verbindungsgebühr oder der erfassten Verbindungsgebühr als eine aktuelle Verbindungsgebühr;
Berechnen einer gesamten Verbindungsgebühr durch Addieren der aktuellen Verbindungsgebühr mit einer gespeicherten akkumulierten Verbindungsgebühr und Speichern der gesamten Verbindungsgebühr.

4. Verfahren nach einem der vorhergehenden Ansprüche, bei dem der Verbindungsraten-Einstellprozess umfasst:
Einrichten einer Verbindungsraten-Einstellfunktion und Eingeben einer gewünschten Verbindungsrate; und
Speichern der gewünschten Verbindungsrate.

5. Verfahren nach einem der vorhergehenden Ansprüche, außerdem mit:
Überprüfen, ob eine Druckfunktion eingestellt ist oder nicht; und
Ausgeben einer berechneten Verbindungsgebühr oder der erfassten Verbindungsgebühr zu einem Drucker.

6. Verfahren nach Anspruch 5, bei dem die Verbindungsgebühr in einer Form ausgedruckt wird, die zumindest eines von den Nachfolgenden enthält: Tag, Zeit, Bestimmungstelefonnummer, aktuelle Verbindungsgebühr und gesamte Verbindungsgebühr.

7. Vorrichtung zum Bestimmen einer Verbindungsgebühr in einer Faksimile-Vorrichtung, mit:
einer Einrichtung zum Empfangen von Service-Informationen;
einer Einrichtung zum Bestimmen, ob die Verbindungsgebühren-Informationen, die in den Service-Informationen enthalten sind, sich in einer Geräte-Nachricht oder in einer Anzeige-Nachricht befinden;
einer Einrichtung zum Erfassen einer Anzahl von Gebühreneinheiten aus der Geräte-Nachricht und Berechnen der Verbindungsgebühr durch Multiplizieren der Anzahl der Gebühreneinheiten mit einer voreingestellten Verbindungsrate, wenn sich die Verbindungsgebühren-Informationen in einer Geräte-Nachricht befinden; und
einer Einrichtung zum Erfassen der Verbindungsgebühr aus der Anzeige-Nachricht, wenn sich die Verbindungsgebühren-Informationen in einer Anzeige-Nachricht befinden.

8. Vorrichtung nach Anspruch 7, die dazu ausgestaltet ist, um ein Verfahren nach einem der Ansprüche 2 bis 6 durchzuführen.

9. Vorrichtung nach Anspruch 8, außerdem mit einem Anzeigefenster zum Anzeigen einer Verbindungsgebühr.

10. Vorrichtung nach Anspruch 8, mit einem Drucker zum Drucken einer Verbindungsgebühr in einer vorbestimmten Druckform, die zumindest eines von den Nachfolgenden enthält: Tag, Zeit, Bestimmungstelefonnummer, aktuelle Verbindungsgebühr und gesamte Übertragungsgebühr.

## Revendications

1. Procédé de détermination de frais d'appels pour un dispositif de télécopie comprenant:
la détermination du fait que des informations de frais d'appels qui sont incluses dans des informations de service sont dans un message de complément de service ou dans un message d'affichage;
si les informations de frais d'appels sont dans un message de complément de service, la détection d'un nombre d'unités de taxation à partir du message de complément de service et le calcul des frais d'appels en multipliant le nombre d'unités de taxation par un tarif d'appel qui a été fixé par une opération de détermination de tarif d'appel ; et
si les informations de frais d'appels sont dans un message d'affichage, la détection des frais d'appels à partir du message d'affichage.

2. Procédé selon la revendication 1, comprenant en outre l'affichage des frais d'appels calculés ou des frais d'appels détectés sur un affichage du dispositif de télécopie.

3. Procédé selon la revendication 1 ou la revendication 2, comprenant en outre :
la mémorisation des frais d'appels calculés ou des frais d'appels détectés en tant que frais d'appels actuels ; et
le calcul de frais d'appels totaux en ajoutant les frais d'appels actuels à des frais d'appels cumulés mémorisés et la mémorisation des frais d'appels totaux.

4. Procédé selon l'une quelconque des revendications précédentes, dans lequel l'opération de détermination de tarif d'appel comprend :
l'établissement d'une fonction de détermination de tarif d'appel et l'entrée d'un tarif d'appel souhaité ; et
la mémorisation du tarif d'appel souhaité.

5. Procédé selon l'une quelconque des revendications précédentes, comprenant en outre :
la vérification du fait qu'une fonction d'impression est activée ou non ; et
la sortie de frais d'appels calculés ou des frais d'appels détectés vers une imprimante.

6. Procédé selon la revendication 5, dans lequel les frais d'appels sont imprimés sous une forme qui comprend au moins l'un des éléments suivants: un jour, une heure, un numéro de téléphone de destination, des frais d'appels actuels et des frais d'appels totaux.

7. Dispositif pour déterminer des frais d'appels dans un dispositif de télécopie comprenant :
des moyens pour recevoir des informations de service ;
des moyens pour déterminer si des informations de frais d'appels incluses dans les informations de service sont dans un message de complément de service ou dans un message d'affichage ;
des moyens pour détecter un nombre d'unités de taxation à partir du message de complément de service et pour calculer les frais d'appels en multipliant le nombre d'unités de taxation par un tarif d'appel préréglé si les informations de frais d'appels sont dans un message de complément de service ; et
des moyens pour détecter les frais d'appels à partir du message d'affichage si les informations de frais d'appels se trouvent dans un message d'affichage.

8. Dispositif selon la revendication 7, adapté pour exécuter un procédé selon l'une quelconque des revendications 2 à 6.

9. Dispositif selon la revendication 8, comprenant une fenêtre d'affichage pour afficher des frais d'appels.

10. Dispositif selon la revendication 8, comprenant une imprimante pour imprimer des frais d'appels sous une forme d'impression prédéterminée comprenant au moins l'un des éléments suivants : un jour, une heure, un numéro de téléphone de destination, des frais d'appels actuels et des frais d'appels totaux.
